(19) Europäisches Patentamt
European Patent Office
Office européen des brevets

(11) **EP 2 365 318 B1**

(12) **EUROPÄISCHE PATENTSCHRIFT**

(45) Veröffentlichungstag und Bekanntmachung des Hinweises auf die Patenterteilung:
**31.05.2017   Patentblatt 2017/22**

(51) Int Cl.:
*G01N 21/956* *(2006.01)*          *G06T 7/00* *(2017.01)*
*H05K 13/00* *(2006.01)*          *G06T 1/00* *(2006.01)*
*H05K 13/08* *(2006.01)*

(21) Anmeldenummer: **11153918.5**

(22) Anmeldetag: **09.02.2011**

(54) **Verfahren zur Inspektion von beliebig verteilten Prüfbereichen auf elektronischen Baugruppen**

Method for inspecting randomly distributed test areas on electronic components

Procédé d'inspection de domaines de contrôle répartis de manière quelconque sur des blocs électroniques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2010   DE 102010008631**

(43) Veröffentlichungstag der Anmeldung:
**14.09.2011   Patentblatt 2011/37**

(73) Patentinhaber: **Göpel electronic GmbH**
**07745 Jena (DE)**

(72) Erfinder:
• **Hedderich, Frank**
  **07381 Pössneck (DE)**
• **Rabich, Stephan**
  **07749 Jena (DE)**

(74) Vertreter: **Oehmke, Volker**
**Patentanwälte Oehmke & Kollegen**
**Neugasse 13**
**07743 Jena (DE)**

(56) Entgegenhaltungen:
**EP-A2- 0 718 623          WO-A1-98/52156**
**WO-A2-2007/026361**

**Beschreibung**

Die Erfindung betrifft ein Verfahren zur Inspektion von beliebig verteilten Prüfbereichen auf elektronischen Baugruppen. Die Erfindung ist für prüftechnische Anwendungen bildgebender Verfahren, insbesondere für die Prüfung von Flachbaugruppen in der Elektrotechnik und Elektronik, vorgesehen.

Die erreichbare Taktzeit einer Produktionslinie wird neben einer Reihe weiterer Parameter auch durch die benötigten Prüfzeiten bestimmt.

Für die visuelle und bildgebende Prüfung von Bauteilanordnungen, wie beispielsweise von Flachbaugruppen in der Elektrotechnik und Elektronik, sind nach derzeitigem Stand der Technik grundsätzlich zwei Vorgehensweisen üblich.

Bei einem ersten Verfahren kann die gesamte Baugruppe durch eine Scannerzeile auf einmal erfasst und das aufgenommene Bild weiterverarbeitet werden. Durch die kontinuierliche und vollständige Aufnahme der Baugruppe wird immer die gleiche Zeit für die Prüfung benötigt. Nachteilig an diesem Verfahren sind die zum Teil erheblichen Abbildungsfehler in den Randbereichen des aufgenommenen Bildes und die Verwendung nur einer Beleuchtungsvariante.

Bei einem weiteren Verfahren werden mit Hilfe von Matrixkameras nur die zu prüfenden Bereiche der Baugruppe aufgenommen und verarbeitet. Dabei werden eine oder mehrere Kameras relativ zur Baugruppe bewegt und je nach Prüfanforderung unter verschiedenen Beleuchtungen Bilder aufgenommen und verarbeitet. Jede Kamera erfasst dabei diejenigen Bereiche der Baugruppe, die in ihrem Kamerafeld (nachfolgend als Bildfeld bezeichnet) zu liegen kommen. Nach erfolgter Bildaufnahme werden Baugruppe und Kameras in die nächste Prüfposition verfahren. Jedes Beschleunigen und Bremsen des Kamerakopfes benötigt dabei relativ viel Zeit.

In der EP 0 718 623 A2 wird ein Verfahren zur Inspektion von Leiterplatten offenbart, wobei der zu inspizierende Bereich in Bildfelder aufgeteilt wird. Mit dem offenbarten Algorithmus zur Auswahl von Bildfeldern ist ein effektives Abdecken einer vorgegebene Prüffläche nur bedingt möglich. Das Auffinden der Bildfelder erfolgt durch einfaches, einmaliges Abrastern des zu inspizierenden Bereiches, was eine Optimierung der Anzahl an Bildfeldern nicht vorsieht.

Um die Prüfzeit zu minimieren ist es deshalb sinnvoll, die Anzahl der für die Prüfung notwendigerweise zu erfassenden Bildfelder so gering wie möglich zu halten.

Problematisch ist dabei, dass Form und Bestückung der zu prüfenden Baugruppen sehr variabel sein können und in der Regel nicht auf die Ausdehnungen der für die Prüfung verwendeten Bildfelder abgestimmt sind.

Abstrahiert ergibt sich daher das Problem, mit möglichst wenigen geometrischen Flächen wie z. B. Rechtecken (den Bildfeldern) eine beliebige Anzahl unterschiedlich geformter und beliebig angeordneter Prüfbereiche (z. B. die Draufsichten von zu prüfenden Elementen einer Baugruppe) in möglichst optimaler Weise zu überdecken.

Einen Lösungsansatz bietet die WO 98/52156 A1, in der ein Verfahren zur Inspektion von beliebig verteilten Prüfbereichen auf elektronischen Baugruppen offenbart wird.

Verfahren, die sich eines Algorithmus zur Prüfung aller möglichen Anordnungen von Bildfeldern bedienen, benötigen selbst mit moderner Rechentechnik bei entsprechend großen Baugruppen inakzeptabel lange Rechenzeiten.

Der Erfindung liegt daher die Aufgabe zugrunde, eine Möglichkeit zur Auswahl von Bildfeldern aufzuzeigen, durch die eine Anzahl von zu erfassenden Prüfbereichen in einer vorgegebenen Prüffläche mit möglichst wenigen Bildfeldern abgedeckt werden können und bei der die Auswahl dieser Bildfelder in einer effektiven und reproduzierbaren Weise erfolgt.

Nachfolgend wird mit dem Begriff "Anordnung" eine durch x- und y-Koordinaten hinsichtlich ihrer Lage in einer x-y-Ebene eindeutig beschreibbare Positionierung des Bildfeldes bezeichnet.

Die Aufgabe wird durch ein Verfahren zur Inspektion von beliebig verteilten Prüfbereichen auf elektronischen Baugruppen gelöst, bei dem eine Auswahl von Anordnungen eines von Begrenzungslinien virtuell begrenzten Bildfeldes in einer x-y-Ebene, die in einer Prüffläche eine Grundgesamtheit von Prüfbereichen bekannter Dimensionen und Lagebeziehungen enthält, dergestalt erfolgt, dass alle Prüfbereiche durch eine Gesamtheit von Anordnungen je einmal vollständig von einem Bildfeld beinhaltet werden. Das Verfahren umfasst die Schritte: des Abrasterns der Prüffläche mit dem Bildfeld und dem Finden von Anordnungen des Bildfeldes als Momentaufnahmen des Abrastervorganges, wobei eine erste Anordnung und jede weitere Anordnung des Bildfeldes gefunden werden, wenn mindestens ein, in einer vorher gefundenen Anordnung des Bildfeldes nicht vollständig beinhalteter, Prüfbereich in dem zu einem Moment betrachteten Bildfeld vollständig beinhaltet ist und die Umrisslinie eines in dem Bildfeld der Anordnung vollständig beinhalteten Prüfbereiches zu einer, als Bezugslinie bezeichneten, Begrenzungslinie des Bildfeldes definiert beabstandet zu liegen kommt. Ferner erfolgt das Erfassen sowohl der jeweils gefundenen Anordnung als auch der jeweils von dem Bildfeld einer Anordnung vollständig beinhalteten Prüfbereiche, gefolgt von der Erstellung einer Rangfolge aller erfasster Anordnungen anhand einer Regel. Aus den in eine Rangfolge gebrachten Anordnungen wird eine Anordnung ausgewählt und diese ausgewählte Anordnung zu einer Gesamtheit von Anordnungen hinzugefügt. Weiterhin folgt der Schritt des virtuellen Entfernens der von der ausgewählten Anordnung vollständig umfassten Prüfbereiche aus der Grundgesamtheit der Prüfbereiche. Die vorgenannten Verfahrensschritte zur Erstellung einer Rangfolge der Anordnungen werden so lange wiederholt, bis alle Prüfbereiche in einem anhand einer Rangfolge ausgewählten Anordnung eines Bildfeldes beinhaltet und der Gesamtheit von Anordnungen hinzugefügt sind.

Die x-y-Ebene kann als Projektionsebene angesehen werden, auf welcher die Draufsichten der zu prüfenden Elemente als Prüfbereiche abgebildet sind. Die Regel zur Erstellung der Rangfolge ist eine Funktion nach Anspruch 1. Die Abmaße des Bildfeldes sind so gewählt, dass jeder einzelne der zu erfassenden Prüfbereiche von dem Bildfeld vollständig abgedeckt werden kann. Prüfbereiche, deren Abmaße größer als die Abmaße des Bildfeldes sind, können mit dem erfindungsgemäßen Verfahren nicht erfasst werden.

Das Verfahren wird vorzugsweise als virtuelles Abrastern der Prüffläche und als rein rechentechnische Auswahl von Anordnungen des Bildfeldes angewendet. Es bleibt jedoch dem Anwender unbenommen, tatsächlich die entsprechenden Abrasterbewegungen durchführen zu lassen. Dies kann sinnvoll sein, um beispielsweise die tatsächliche, qualitative Brauchbarkeit der Abbildungen der ausgewählten Anordnungen zu prüfen.
Es ist vorteilhaft, wenn das Bildfeld in der x-y-Ebene so orientiert wird, dass mindestens eine der Begrenzungslinien des Bildfeldes parallel zu Abschnitten der Umrisslinien einer möglichst großen Anzahl von Prüfbereichen ausgerichtet ist.

Es ist von großem Vorteil, wenn das Abrastern der Prüffläche zeilenweise erfolgt. Die einzelnen Zeilen sind vorzugsweise zueinander parallel und in eine Richtung der x-y-Ebene weisend angeordnet. Die Abstände zwischen den einzelnen Zeilen können variiert werden und zwar vorteilhafterweise so, dass die Zeilenabstände auf die bekannten Dimensionen und Lagebeziehungen der Prüfbereiche abgestimmt werden. Dadurch wird eine optimale Anzahl von Zeilen abgerastert, da solche Zeilen, die bei zugrundelegen der oben genannten Bedingungen keine neuen Anordnungen des Bildfeldes beinhalten, von dem Vorgang des Abrasterns ausgeschlossen werden.

Weiterhin kann es von Vorteil sein, wenn der Vorgang des Abrasterns nicht jeweils am Anfang einer Zeile beginnt, sondern erst mit einem definierten Abstand zu der Umrisslinie eines bekannten Prüfbereiches, welches die oben genannten Bedingungen für das Entstehen einer neuen Anordnung erfüllt. Es ist äußerst vorteilhaft, wenn der Prüfbereich mit einem Abstand von Null zu der Bezugslinie zu liegen kommt. Je nach Wahl des Nullpunktes der Messstrecke für die Feststellung des Abstandes, können Abschnitte der Umrisslinie des Prüfbereiches dann auch mit Bereichen der Bezugslinie zusammenfallen.

Es kann weiterhin ein Abstand von Abschnitten der Umrisslinie des Prüfbereiches zu einer der anderen Begrenzungslinien des Bildfeldes definiert werden, wobei auch hier Abschnitte der Umrisslinie mit mindestens einer Begrenzungslinie des Bildfeldes zusammenfallen können.

Der Abrastervorgang kann je Zeile auch beendet werden, wenn keine weiteren solcher Prüfbereiche in der betreffenden Zeile bekannt sind.

Die Abrasterbewegung wird durch eine relative Bewegung der Prüffläche und des Bildfeldes zueinander bewirkt.

Die Regel zur Erstellung einer Rangfolge kann vielgestaltig sein und an die jeweiligen Erfordernisse angepasst werden. Es ist für die Durchführung des erfindungsgemäßen Verfahrens unter Zuhilfenahme rechentechnischer Anlagen vorteilhaft, wenn die Regel in Form einer definierten Beziehung von erfassten und durch Berechnungen ermittelten Parametern zueinander festgelegt wird.

Solche Beziehungen können z. B. durch mathematische Funktionen und Entscheidungsregeln definiert werden, die zudem in ein Regelwerk integriert sein können, durch welches die einzelnen Verfahrensschritte und deren gegebenenfalls vorhandenen jeweiligen Alternativen in logische Zusammenhänge zueinander gebracht werden.

Vorzugsweise sind die Regeln zur Erstellung einer Rangfolge der bei einem Abrastern der Prüffläche erfassten Anordnungen so gestaltet, dass den Anordnungen durch die Regel jeweils ein Merkmal, beispielsweise ein Zahlenwert, zugewiesen wird, anhand dessen die Rangfolge bestimmt wird.

Die Regeln können vorteilhaft so gestaltet sein, dass den in den jeweiligen Anordnungen beinhalteten Prüfbereichen Gewichtungswerte zugewiesen werden können, so dass die Prüfbereiche mit definierbaren Beiträgen in das Merkmal eingehen.

Die Auswahl der Anordnungen aus den jeweiligen Rangfolgen kann nach frei wählbaren Kriterien erfolgen. So können die Rangfolgen dadurch erstellt werden, dass die den Anordnungen zugewiesenen Merkmale nach ihrer Größe auf- oder absteigend sortiert werden. In den selten auftretenden Fällen, in denen zwei oder mehr potentiell auszuwählende Anordnungen identische Merkmale aufweisen, kann eine zusätzliche Regel für die Auswahl der Anordnung definiert werden. Beispielsweise kann eine der Anordnungen zufällig ausgewählt werden.

Nach Auswahl einer Anordnung werden alle in der ausgewählten Anordnung beinhalteten Prüfbereiche virtuell aus der Grundgesamtheit der Prüfbereiche entfernt.

Es erfolgt ein erneutes Abrastern der gesamten Prüffläche, wobei die virtuell aus der Grundgesamtheit der Prüfbereiche entfernten Prüfbereiche unberücksichtigt bleiben. Wiederum werden den gefundenen und erfassten Anordnungen Merkmale zugewiesen, eine Rangliste erstellt und eine der gefundenen Anordnungen ausgewählt. Mit diesem Vorgehen wird eine hohe Präzision bei der Auswahl der Anordnungen des Bildfeldes erreicht.

Alternativ kann auch auf ein erneutes Abrastern verzichtet und die nach dem Entfernen der Prüfbereiche aus der Grundgesamtheit der Prüfbereiche verbleibenden möglichen Anordnungen durch die Regel neu bewertet werden. Ein erneutes Abrastern der Prüffläche unterbleibt. Mit dieser Vorgehensweise sinkt zwar die Präzision des Verfahrens, jedoch führt es in kürzerer Zeit zu einem Ergebnis.

Es ist ferner möglich, dass das Abrastern zeilenweise erfolgt und immer dann eine Anordnung des Bildfeldes gefunden wird, wenn mindestens ein, in einer vorher gefundenen Anordnung des Bildfeldes in der aktuellen Zeile nicht vollständig beinhalteter, Prüfbereich in dem zu einem Moment betrachteten Bildfeld vollständig beinhaltet ist und die Umrisslinie eines, in dem Bildfeld der Anordnung vollständig beinhalteten, Prüfbereiches zu einer, als Bezugslinie bezeichneten, Begrenzungslinie des Bildfeldes definiert beabstandet zu liegen kommt.

Die beschriebenen Vorgehensweisen können in dem Verfahren auch miteinander kombiniert werden.

Die oben genannten Schritte werden so oft wiederholt, bis alle Prüfbereiche in einer, aus einer Rangfolge ausgewählten, Anordnung beinhaltet sind.

Es können Bedingungen in das Verfahren implementiert sein, durch welche die Anzahl der Abrastervorgänge reduziert wird. So kann beispielsweise festgelegt sein, dass aus einer Rangfolge von Anordnungen, die nur aus einer geringen, definierten Anzahl von Anordnungen besteht, die zudem identische Merkmale aufweisen, alle diese Anordnungen ausgewählt werden, ohne dass ein erneuter Abrastervorgang stattfindet. Die vorgenannten Bedingungen können natürlich beliebig kombiniert werden.

Alle ausgewählten Anordnungen zusammen bilden die Gesamtheit der Anordnungen. Die Gesamtheit der Anordnungen im Sinne dieser Erfindung setzt sich also aus den nach jedem Abrastervorgang aus einer erstellten Rangfolge ausgewählten Anordnungen eines Bildfeldes zusammen und ist nicht gleichbedeutend mit der Anzahl von Anordnungen, die je Abrastervorgang gefunden werden. Die Gesamtheit der Anordnungen stellt den für die untersuchte Prüffläche mit dem erfindungsgemäßen Verfahren ermittelten optimalen Satz von Anordnungen des Bildfeldes dar.

Es ist vorteilhaft, wenn die Gesamtheit der Anordnungen so strukturiert wird, dass eine effiziente Abfolge der Erfassung über die Prüffläche möglich wird. Zum Beispiel können diese korrespondierend zu einer effizienten Führung der verwendeten Kamera(-s) geordnet werden.

Die einmal ermittelte Gesamtheit von Anordnungen stellt die Grundlage für eine messtechnische, graphische oder einer sonstigen Erfassung sowie weiteren Auswertung der erfassten Daten der in der Gesamtheit von Anordnungen beinhalteten Prüfbereiche dar. Sie kann natürlich auf eine Vielzahl von gleichartigen Baugruppen übertragen werden.

Nachfolgend wird das erfindungsgemäße Verfahren anhand von Ausführungsbeispielen und Abbildungen näher erläutert.

Dabei zeigen:

Fig. 1 eine erste Positionierung von Prüfbereichen und Anordnungen von Bildfeldern in einer x-y-Ebene und

Fig. 2 eine zweite Positionierung von Prüfbereichen und Anordnungen von Bildfeldern in einer x-y-Ebene.

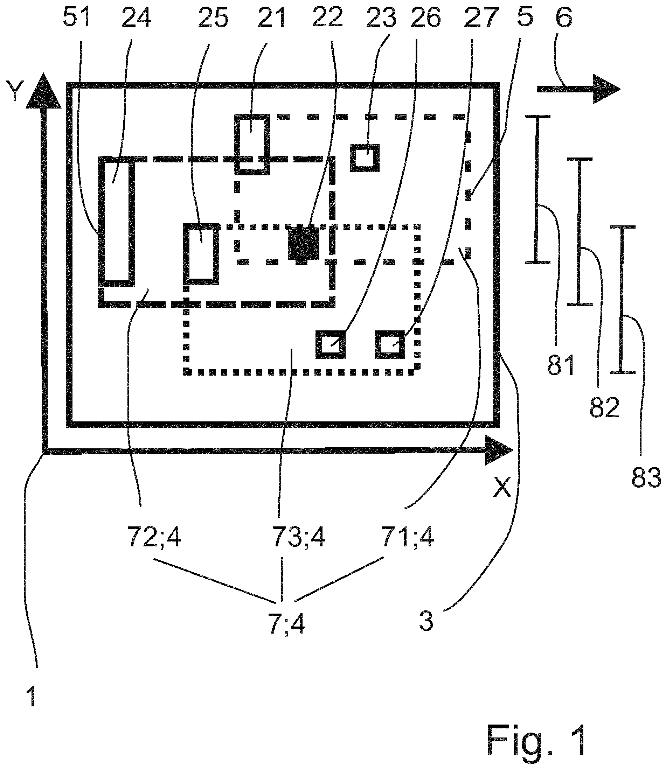

Gemäß Fig. 1 sind in einer durch eine x- und y-Achse gegebenen x-y-Ebene 1 eine Grundgesamtheit von Prüfbereichen 21 bis 27 abgebildet, die innerhalb einer Prüffläche 3 liegen. Weiterhin sind eine erste, zweite und dritte Anordnung 71 bis 73 eines Bildfeldes 4 gezeigt.

Die Prüffläche 3 wird abgerastert, indem das rechteckige Bildfeld 4 über die Prüffläche 3 geführt wird. Das Bildfeld 4 ist virtuell von Begrenzungslinien 5 umschlossen, wobei im Ausführungsbeispiel eine linke, vertikal verlaufende Begrenzungslinie 5 als Bezugslinie 51 verwendet wird. Zur übersichtlicheren Darstellung sind die Begrenzungslinien 5 der ersten, zweiten und dritten Anordnung 71 bis 73 des Bildfeldes 4 in unterschiedlichen Strichelungen gezeigt.

Das Bildfeld 4 wird entlang zueinander paralleler, virtueller Zeilen geführt, wobei die Zeilen in Richtung der x-Achse und senkrecht zur Richtung der y-Achse verlaufen. Eine Abrasterbewegung 6 erfolgt zeilenweise in Richtung zunehmender x-Werte. Die Lagen der Zeilen werden durch Werte der y-Achse bestimmt, die den Zeilen zugeordneten werden. Durch die zuzuordnenden Werte der y-Achse werden auch die Abstände der Zeilen zueinander festgelegt.

Die Lage und die Dimensionierung eines jeden der Prüfbereiche 21 bis 27 innerhalb der Prüffläche 3 sind bekannt und werden in einem für die Durchführung des Verfahrens geeigneten Datenformat und einer für diesen Zweck geeigneten Weise bereitgestellt.

Der Abrastervorgang mit Abrasterbewegung 6, Führung des Bildfeldes 4 über die Prüffläche 3 und Vergleich der bekannten Lagen und Dimensionierungen der Prüfbereiche 21 bis 27 mit der augenblicklichen Lage des Bildfeldes 4 und seiner Begrenzungslinien 5 erfolgt gesteuert. Alle hierfür benötigten Daten werden durch eine hinsichtlich ihrer Speicherkapazität und Verarbeitungsgeschwindigkeit geeignete rechentechnische Anlage, die mit einer Steuerung verbunden und/oder Teil dieser ist, gespeichert, bereitgestellt und ausgewertet.

Die Lage einer ersten Zeile 81 wird durch den größten Wert auf der y-Achse bestimmt, der in mindestens einem der Prüfbereiche 21 bis 27 beinhaltet ist.

In der gegebenen Verteilung von Prüfbereichen 21 bis 27 gemäß Fig. 1 umfasst der Prüfbereich 21 die Punkte mit den höchsten Werten auf der y-Achse. Die von den anderen vorhandenen Prüfbereiche 22 bis 27 umfassten Punkte in der x-y-Ebene weisen geringere Höchstwerte auf der y-Achse auf. Das Bildfeld 4 wird so positioniert, dass dessen obere Begrenzungslinie 5 mit dem oberen Abschnitt der Umrisslinie des Prüfbereiches 21 (höchste Werte des Prüfbereiches 21 auf der y-Achse) und die Bezugslinie 51 mit dem linken, vertikalen Abschnitt der Umrisslinie des Prüfbereiches 21 (kleinste Werte des Prüfbereiches 21 auf der x-Achse) zusammenfällt.

In weiteren Ausführungen können die Begrenzungslinie 5 und/oder die Bezugslinie 51 des Bildfeldes 4 auch mit definierten Abständen zu Abschnitten der Umrisslinie des Prüfbereiches 21 zu liegen kommen.

Im weiteren Verlauf des Abrastervorganges wird immer dann eine Anordnung 7 des Bildfeldes 4 gefunden, wenn in diesem ein Prüfbereich vollständig beinhaltet ist, welcher nicht durch eine vorher gefundene Anordnung 7 vollständig beinhaltet ist und außerdem ein vollständig beinhalteter Prüfbereich mit mindestens einem Punkt seiner Umrisslinie auf der Bezugslinie 51 zu liegen kommt.

Der Algorithmus kann in weiteren Ausführungen auch vorsehen, dass immer dann eine Anordnung 7 des Bildfeldes 4 gefunden wird, wenn in dem Bildfeld 4 ein Prüfbereich vollständig beinhaltet ist, der in keiner der vorher gefundenen Anordnungen 7 der aktuellen Zeile vollständig beinhaltet ist und ein vollständig beinhalteter Prüfbereich mit mindestens einem Punkt seiner Umrisslinie auf der Bezugslinie 51 zu liegen kommt.

Durch die erste Anordnung 71 des Bildfeldes 4 werden die genannten Bedingungen erfüllt. Zugleich wird durch die erste Anordnung 71 die Lage und die Breite der ersten Zeile 81 bestimmt, wobei die Breite der ersten Zeile 81 gleich der Ausdehnung des Bildfeldes 4 in Richtung der y-Achse ist.

Durch die Begrenzungslinien 5 des Bildfeldes 4 der ersten Anordnung 71 werden die Prüfbereiche 21, 22 und 23 vollständig umschlossen. Diese werden als von der ersten Anordnung 71 vollständig beinhaltet registriert und gespeichert. Von jeder neu gefundenen Anordnung 7 wird die Position relativ zur Prüffläche 3 gespeichert.

Anschließend werden die Lage und die Breite der ersten Zeile 81 mit den bekannten Dimensionen und Lagebeziehungen der Grundgesamtheit der Prüfbereiche abgeglichen und geprüft, ob in Richtung der Abrasterbewegung 6 einer der Prüfbereiche 24 bis 27 so in der ersten Zeile 81 enthalten ist, dass eine weitere Anordnung 7 gefunden wird.

Im Ausführungsbeispiel gemäß Fig. 1 findet sich in der ersten Zeile 81 keine weitere Anordnung 7, durch welche die oben genannten Bedingungen erfüllt werden.

Nach Durchlauf der ersten Zeile 81 wird das Abrastern in einer zweiten Zeile 82 fortgesetzt. Deren Lage bestimmt sich durch den nächstkleineren Wert der y-Achse, der in mindestens einem Prüfbereich 24 bis 27 beinhaltet ist und außerdem eine neue Anordnung 7 des Bildfeldes 4 erlaubt.

Dazu wird das Bildfeld 4 solange senkrecht, und gegebenenfalls auch parallel, zur ersten Zeile 81 verschoben, bis die der ersten Zeile 81 zugewandte Begrenzungslinie 5 mit einem der ersten Zeile 81 am nächsten liegenden Punkt zusammenfällt, der zu einem, von einer der vorhergehenden Anordnungen 7 des Bildfeldes 4 noch nicht vollständig umfassten, Prüfbereich gehört. Das Bildfeld 4 wird wiederum parallel der ersten Zeile 81 so positioniert, dass die Bezugslinie 51 an der, der Abrasterbewegung 6 abgewandten, Seite des Prüfbereiches 24 in mindestens einem Punkt mit dessen Umrisslinie zusammenfällt. Der Prüfbereich 24 wird vollständig von dem Bildfeld 4 beinhaltet. Dabei kann die neu gefundene Anordnung 7 auch teilweise innerhalb der ersten Zeile 81 zu liegen kommen, so dass sich aufeinander folgende Zeilen überlappen.

Die zweite Anordnung 72 erfüllt die genannten Bedingungen. Der Prüfbereich 22 wird als sowohl von der ersten Anordnung 71 als auch von der zweiten Anordnung 72 vollständig beinhaltet registriert. Auch in der zweiten Zeile 82 führt ein Weiterschieben des Bildfeldes 4 entlang der Zeile 82 nicht zum Auffinden einer weiteren Anordnung 7.

Die Festlegung einer dritten Zeile 83 erfolgt analog zu dem oben Erläuterten. Auch in der dritten Zeile 83 wird nur eine Anordnung 7, die dritte Anordnung 73, gefunden. Diese beinhaltet die Prüfbereiche 22, 25, 26 und 27 vollständig.

Die Lagen der sich in Richtung der y-Achse überlappenden Zeilen 81 bis 83 sind durch die Spangen dargestellt.

Der Prüfbereich 22 wird von allen drei Anordnungen 71 bis 73 vollständig beinhaltet.

Den bei dem ersten Abrastervorgang gefundenen Anordnungen 71 bis 73 wird entsprechend einer Regel in Form einer zu maximierenden Funktion der allgemeinen Schreibweise

$$Z = \max_{j=1}^{g} \left\{ \sum_{i=1}^{nj} (Ci^{k}) \right\}$$

jeweils ein Zahlenwert zugewiesen, wobei

Z     die zu maximierende Funktion,

j     eine Laufvariable über die Anzahl der gefundenen Anordnungen $7_j$ des Bildfeldes 4,

g     die gefundene Anzahl von Anordnungen $7_j$ des Bildfeldes 4,

$n_j$     die Anzahl der in Anordnung $7_j$ vollständig enthaltenen Prüfbereiche $2_i$,

i     eine Laufvariable über die Anzahl der in der Anordnung $7_j$ vollständig enthaltenen Prüfbereiche,

$c_i$     die Anzahl der Anordnungen $7_j$, durch die der i-te Prüfbereich vollständig erfasst wird und

k     eine reelle Zahl ist.

Der den jeweiligen Anordnungen 71 bis 73 zugewiesene Zahlenwert ist dabei durch den Ausdruck in der geschweiften Klammer gegeben. Durch die außerhalb der geschweiften Klammer stehenden Ausdrücke wird die Erstellung einer Rangfolge der den Anordnungen 71 bis 73 zugewiesenen Zahlenwerten bestimmt.

Für den ersten Abrastervorgang sind gemäß Fig. 1

$g = 3$; $n_1 = 3$; $n_2 = 2$; $n_3 = 4$; woraus sich nach obiger Funktion die folgenden Zahlenwerte der einzelnen Anordnungen $7_j$ ergeben:

Anordnung $71 = 1^k + 1^k + 3^k$,
Anordnung $72 = 1^k + 3^k$,
Anordnung $73 = 1^k + 1^k + 1^k + 3^k$.

Der Term $3^k$ steht jeweils für den von drei Anordnungen 71, 72 und 73 vollständig beinhalteten Prüfbereich 22, während jeder der Terme $1^k$ einen der in den jeweiligen Anordnungen 71 bis 73 nur einmal vollständig beinhalteten Prüfbereiche 21 und 23 bis 27 darstellt.

Die gefundenen Anordnungen 71 bis 73 werden anhand der ermittelten Zahlenwerte in eine Rangfolge gebracht. Im Fall einer zu maximierenden Funktion Z wird die dritte Anordnung 73 als diejenige mit dem höchsten Zahlenwert ausgewählt.

Die ausgewählte dritte Anordnung 73 wird einer Gesamtheit von Anordnungen 7 hinzugefügt, wobei die Gesamtheit aus den jeweils aus einer Rangfolge ausgewählten Anordnungen 7 besteht.

In weiteren Ausführungen kann die Funktion eine zu minimierende Funktion sein. Die Funktion kann auch beliebig erweitert und abgeändert werden. Weiterhin kann jeglicher Algorithmus (Regel) verwendet werden, der die Erstellung einer Rangfolge der Anordnungen 7 erlaubt.

Die in der dritten Anordnung 73 enthaltenen Prüfbereiche 22, 25, 26 und 27 werden virtuell aus der Grundgesamtheit der Prüfbereiche 21 bis 27 entfernt und bei den nachfolgenden Schritten nicht mehr beachtet.

Über die verbleibenden Prüfbereiche 21, 23 und 24 beginnt ein erneuter Abrastervorgang.

Alternativ können auch die nach der Auswahl der dritten Anordnung 73 verbliebenen ersten und zweiten Anordnungen 71 und 72 erneut mittels der angegebenen Regel in eine Rangfolge gebracht und ausgewählt werden.

Im Beispiel erhält nun die erste Anordnung 71 nach beiden möglichen Vorgehensweisen einen Zahlenwert von $1^k + 1^k$ und die zweite Anordnung 72 einen von $1^k$. Die Gesamtheit der Anordnungen 7 enthält alle gefundenen Anordnungen 71 bis 73.

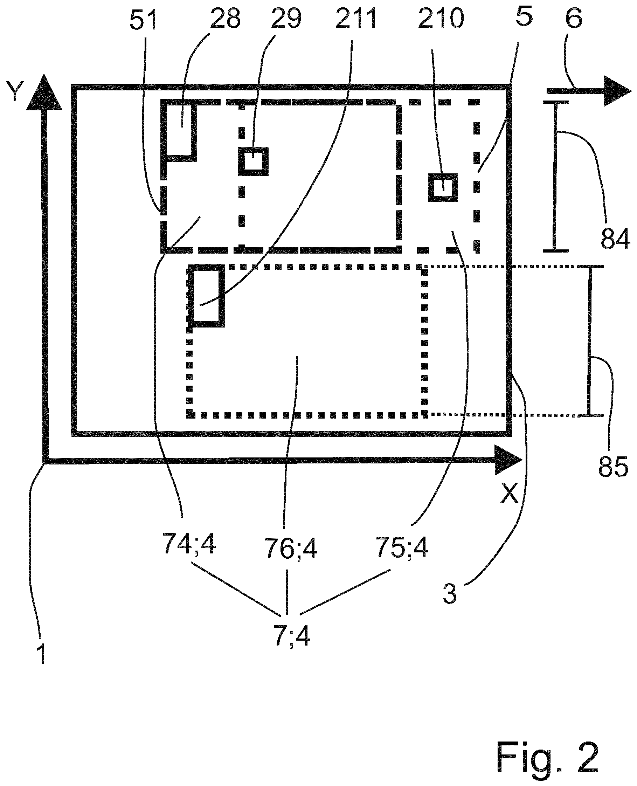

Gemäß Fig. 2 beinhaltet die Prüffläche 3 eine Grundgesamtheit von Prüfbereichen 28, 29, 210 und 211. In einer, auf einer vierten Zeile 84 liegenden, vierten Anordnung 74 (dicke Strichlinie) des Bildfeldes 4 sind die Prüfbereiche 28 und 29 vollständig beinhaltet. Wird das Bildfeld 4 weiter in Richtung der Abrasterbewegung 6 entlang der vierten Zeile 84 verschoben, so findet sich eine neue, fünfte Anordnung 75 (dünne Strichlinie) dann, wenn der Prüfbereich 210 vollständig von dem Bildfeld 4 beinhaltet wird und der vollständig beinhaltete Prüfbereich 29 mit einem Bereich seiner Umrisslinie mit der Bezugslinie 51 zusammenfällt. Wäre der Prüfbereich 29 nicht vorhanden, würde der Abrastervorgang dann abgestoppt werden, wenn ein Bereich der Umrisslinie des Prüfbereiches 210 mit der Bezugslinie 51 zusammenfällt. Lage und Beginn einer fünften Zeile 85 wird durch den Prüfbereich 211 bestimmt. Wie aus Fig. 2 zu erkennen ist, können die Zeilen auch nicht-überlappend angeordnet sein. Zur Veranschaulichung ist beispielhaft eine sechste Anordnung 76 sowie die obere und untere Begrenzungslinie der fünften Zeile 85 dargestellt.

Das Verfahren kann zur schnellen und reproduzierbaren Ermittlung von Anordnungen 7 eines Bildfeldes 4 verwendet werden, durch das alle Prüfbereiche (21 bis 27 bzw. 28, 29, 210 und 211) einer Grundgesamtheit von Prüfbereichen (21 bis 27 bzw. 28, 29, 210 und 211) einer Prüffläche 3 mindestens einmal erfasst werden. Es handelt sich daher um ein Optimierungsverfahren. Als Einsatzgebiete kommen insbesondere die bildgebende Prüfung von in Baugruppen angeordneten Elementen in der Elektronik und Elektrotechnik in Frage. Das Verfahren kann für die Optimierung der Prüfabläufe von sowohl Auflicht- als auch Durchlichtprüfungen verwendet werden.

Bezugszeichenliste

| | |
|---|---|
| 1 | x-y-Ebene |
| 21 | Prüfbereich |
| 22 | Prüfbereich |
| 23 | Prüfbereich |
| 24 | Prüfbereich |
| 25 | Prüfbereich |
| 26 | Prüfbereich |
| 27 | Prüfbereich |
| 28 | Prüfbereich |
| 29 | Prüfbereich |
| 210 | Prüfbereich |
| 211 | Prüfbereich |
| 3 | Prüffläche |
| 4 | Bildfeld |
| 5 | Begrenzungslinie |
| 51 | Bezugslinie |
| 6 | Abrasterbewegung |
| 7 | Anordnung |
| 71 | erste Anordnung |
| 72 | zweite Anordnung |
| 73 | dritte Anordnung |
| 74 | vierte Anordnung |
| 75 | fünfte Anordnung |
| 76 | sechste Anordnung |
| 81 | erste Zeile |
| 82 | zweite Zeile |
| 83 | dritte Zeile |

84     vierte Zeile

85     fünfte Zeile

**Patentansprüche**

1. Verfahren zur Inspektion von beliebig verteilten Prüfbereichen auf elektronischen Baugruppen bei dem eine Auswahl von Anordnungen eines von Begrenzungslinien virtuell begrenzten Bildfeldes in einer x-y-Ebene, die in einer Prüffläche eine Grundgesamtheit von Prüfbereichen bekannter Dimensionen und Lagebeziehungen enthält, dergestalt erfolgt, dass alle Prüfbereiche durch eine Gesamtheit von Anordnungen je einmal vollständig von einem Bildfeld beinhaltet werden, umfassend die Schritte:

    - des Abrasterns der Prüffläche (3) mit dem Bildfeld (4) und dem Finden von Anordnungen (7) des Bildfeldes (4) als Momentaufnahmen des Abrastervorganges, wobei eine erste Anordnung (71) des Bildfeldes (4), und jede weitere Anordnung (7), gefunden werden, wenn mindestens ein, in einer vorher gefundenen Anordnung (7) des Bildfeldes (4) nicht vollständig beinhalteter, Prüfbereich (21 bis 27 bzw. 28, 29, 210 und 211) in dem zu einem Moment betrachteten Bildfeld (4) vollständig beinhaltet ist und die Umrisslinie eines, in dem Bildfeld (4) der Anordnung (7) vollständig beinhalteten, Prüfbereiches (21 bis 27 bzw. 28, 29, 210 und 211) zu einer, als Bezugslinie (51) bezeichneten, Begrenzungslinie (5) des Bildfeldes (4) definiert beabstandet zu liegen kommt;
    - des Erfassens sowohl der jeweils gefundenen Anordnung (7) als auch der jeweils von dem Bildfeld (4) einer Anordnung (7) vollständig beinhalteten Prüfbereiche (21 bis 27 bzw. 28, 29, 210 und 211);
    - der Erstellung einer Rangfolge aller erfasster Anordnungen (7) anhand einer Regel;
    - der Auswahl einer der in eine Rangfolge gebrachten Anordnungen (7) und des Hinzufügens dieser ausgewählten Anordnung (7) zur Gesamtheit von Anordnungen (7);
    - des virtuellen Entfernens der von der ausgewählten Anordnung (7) vollständig umfassten Prüfbereiche (21 bis 27 sowie 28, 29, 210 und 211) aus der Grundgesamtheit der Prüfbereiche (21 bis 27 sowie 28, 29, 210 und 211) und des Wiederholens der zur Erstellung einer Rangfolge der Anordnungen (7) erforderlichen Schritte so lange, bis alle Prüfbereiche (21 bis 27 sowie 28, 29, 210 und 211) in einer anhand einer Rangfolge ausgewählten Anordnung (7) eines Bildfeldes (4) beinhaltet und der Gesamtheit von Anordnungen (7) hinzugefügt sind, **dadurch gekennzeichnet, dass** die Regel zur Erstellung der Rangfolge eine Funktion der allgemeinen Form

$$Z = \max_{j=1}^{g} \left\{ \sum_{i=1}^{nj} (Ci^{k}) \right\}$$

ist, wobei

    Z die zu maximierende Funktion,
    j eine Laufvariable über die Anzahl der gefundenen Anordnungen ($7_j$) des Bildfeldes (4),
    g die gefundene und erfasste Anzahl von Anordnungen ($7_j$) des Bildfeldes (4),
    i eine Laufvariable über die Anzahl der in der Anordnung ($7_j$) vollständig enthaltenen Prüfbereiche,
    $n_j$ die Anzahl der in Anordnung ($7_j$) vollständig enthaltenen Prüfbereiche ($2_i$),
    $c_i$ die Anzahl der Anordnungen ($7_j$), durch die der i-te Prüfbereich vollständig erfasst wird und
    k eine reelle Zahl ist oder dass die Regel zur Erstellung der Rangfolge eine Funktion der allgemeinen Form

$$Z = \min_{j=1}^{g} \left\{ -\sum_{i=1}^{nj} (Ci^{k}) \right\}$$

ist, wobei

    Z die zu minimierende Funktion,
    j eine Laufvariable über die Anzahl der gefundenen Anordnungen ($7_j$) des Bildfeldes (4),
    g die gefundene Anzahl von Anordnungen ($7_j$) des Bildfeldes (4),
    $n_j$ die Anzahl der in Anordnung ($7_j$) vollständig enthaltenen Prüfbereiche ($2_i$),
    i eine Laufvariable über die Anzahl der in der Anordnung ($7_j$) vollständig enthaltenen Prüfbereiche,
    $c_i$ die Anzahl der Anordnungen ($7_j$), durch die der i-te Prüfbereich vollständig erfasst wird und
    k eine reelle Zahl ist.

2. Verfahren nach Anspruch 1, **dadurch gekennzeichnet, dass** das Abrastern zeilenweise erfolgt und immer dann eine Anordnung (7), des Bildfeldes (4) gefunden wird, wenn mindestens ein, in einer vorher gefundenen Anordnung (7) des Bildfeldes (4) in der aktuellen Zeile nicht vollständig beinhalteter, Prüfbereich (21 bis 27 bzw. 28, 29, 210 und 211) in dem zu einem Moment betrachteten Bildfeld (4) vollständig beinhaltet ist und die Umrisslinie eines, in dem Bildfeld (4) der Anordnung (7) vollständig beinhalteten, Prüfbereiches (21 bis 27 bzw. 28, 29, 210 und 211) zu einer Bezugslinie (51) des Bildfeldes (4) definiert beabstandet zu liegen kommt.

3. Verfahren nach einem der Ansprüche 1 bis 2, **dadurch gekennzeichnet, dass** in einer Anordnung (7) der Abstand zwischen der Umrisslinie mindestens eines vollständig beinhalteten Prüfbereiches (21 bis 27 bzw. 28, 29, 210 und 211) und der Bezugslinie (51) gleich Null ist.

4. Verfahren nach einem der Ansprüche 1 bis 3, **dadurch gekennzeichnet, dass** in einer Anordnung (7) die Umrisslinie mindestens eines vollständig beinhalteten Prüfbereiches in mindestens einem Punkt auf der Bezugslinie (51) zu liegen kommt.

5. Verfahren nach Anspruch 3 oder 4, **dadurch gekennzeichnet, dass** nach dem virtuellen Entfernen der, von der ausgewählten Anordnung (7) vollständig umfassten, Prüfbereiche (21 bis 27 bzw. 28, 29, 210 und 211) aus der Grundgesamtheit der Prüfbereiche (21 bis 27 bzw. 28, 29, 210 und 211) ein erneuter Abrastervorgang beginnt.

6. Verfahren nach Anspruch 3 oder 4, **dadurch gekennzeichnet, dass** nach dem virtuellen Entfernen der von der ausgewählten Anordnung (7) vollständig umfassten Prüfbereiche (21 bis 27 bzw. 28, 29, 210 und 211) aus der Grundgesamtheit der Prüfbereiche (21 bis 27 bzw. 28, 29, 210 und 211) die gefundenen Anordnungen (7) erneut in eine Rangfolge gebracht werden.

7. Verfahren nach Anspruch 5 oder 6, **dadurch gekennzeichnet, dass** alle in einer Rangfolge enthaltenen Anordnungen (7) ausgewählt werden, wenn die Anzahl der in der Rangfolge enthaltenen Anordnungen (7) eine bestimmte Anzahl nicht übersteigt und/oder alle enthaltenen Anordnungen (7) denselben Rang belegen.

**Claims**

1. A method for inspecting randomly distributed test areas on electronic components, wherein arrangements of an image field virtually limited by boundary lines in an x-y plane, which contains a population of test areas of known dimensions and relative positions in a testing surface, are selected such that each test area is completely comprised once in an image field by a totality of arrangements, said method comprising the steps of:

- scanning the testing surface (3) with the image field (4) and finding arrangements (7) of the image field (4) as snapshots of the scanning operation, wherein a first arrangement (71) of the image field (4), and each further arrangement (7), are found if at least one test area (21 to 27 and 28, 28, 29, 210 and 211, respectively) not completely included in a previously found arrangement (7) of the image field (4) is completely included in the image field (4) regarded at a particular moment and the contour line of a test area (21 to 27 and 28, 29, 210 and 211, respectively) completely included in the image field (4) of the arrangement (7) is located at a defined distance from a boundary line (5) of the image field (4), which is referred to as a reference line (51);
- capturing both each arrangement (7) found and each test area (21 to 27 and 28, 29, 210 and 211, respectively) completely included in the image field (4) of an arrangement (7);
- establishing a ranking of all captured arrangements (7) according to a rule;
- selecting one of the ranked arrangements (7) and adding said selected arrangement (7) to the totality of arrangements (7);
- virtually removing the test areas (21 to 27, as well as 28, 29, 210 and 211, respectively), comprised completely by the selected arrangement (7), from the population of test areas (21 to 27, as well as 28, 28, 29,210 and 211, respectively) and repeating the steps required to establish a ranking of the arrangements (7) until all test areas (21 to 27, as well as 28, 29, 210 and 211, respectively) are included in an arrangement (7) of the image field (4) selected according to a ranking and have been added to the totality of arrangements (7), **characterised in that** the rule for establishing the ranking is a function of the general form

$$Z = \max_{j=1}^{g} \left\{ \sum_{i=1}^{nj} (Ci^k) \right\} \Bigg|$$

wherein

Z is the function to be maximized,
j is a control variable for the number of arrangements ($7_j$) found for the image field (4),
g is the number of arrangements ($7_j$) found and recorded for the image field (4),
i is a control variable for the number of test areas completely included in the arrangement ($7_j$),

$n_j$ is the number of test areas ($2_i$) completely included in the arrangement ($7_j$),

$c_i$ is the number of arrangements ($7_j$) which completely cover the i-th test area, and

k is a real number, or **characterised in that** the rule for establishing the ranking is a function of the general form

$$Z = \min_{j=1}^{g} \left\{ -\sum_{i=1}^{nj} (Ci^{k}) \right\}$$

wherein

Z is the function to be minimized,

j is a control variable for the number of arrangements ($7_j$) found for the image field (4),

g is the number of arrangements ($7_j$) of the image field (4),

$n_j$ is the number of test areas ($2_i$) completely included in the arrangement ($7_j$),

i is a control variable for the number of test areas completely included in the arrangement ($7_j$),

$c_i$ is the number of arrangements ($7_j$) which completely cover the i-th test area, and k is a real number.

2. The method according to claim 1, **characterised in that** the scanning is effected line by line and an arrangement (7) of the image field (4) is found whenever at least one test area (21 to 27, and 28, 29, 210 and 211, respectively), which was not completely included in a previously found arrangement (7) of the image field (4) in the current line, is completely included in the image field (4) regarded at a particular moment and the contour line of a test area (21 to 27, and 28, 29, 210 and 211, respectively) completely included in the image field (4) of the arrangement (7) is located at a defined distance from a reference line (51) of the image field (4).

3. The method according to any one of claims 1 to 2, **characterised in that** in an arrangement (7) the distance between the contour line of at least one completely included test area (21 to 27, as well as 28, 29, 210 and 211, respectively) and the reference line (51) is zero.

4. The method according to any one of claims 1 to 3, **characterised in that** in an arrangement (7) the contour line of at least one completely included test area is located on the reference line (51) in at least one point.

5. The method according to claim 3 or 4, **characterised in that**, after virtually removing the test areas (21 to 27, as well as 28, 29, 210 and 211, respectively), comprised completely by the selected arrangement (7), from the population of test areas (21 to 27, as well as 28, 29, 210 and 211, respectively), a new scanning operation begins.

6. The method according to claim 3 or 4, **characterised in that**, after virtually removing the test areas (21 to 27, as well as 28, 29, 210 and 211, respectively), comprised completely by the selected arrangement (7), from the population of test areas (21 to 27, as well as 28, 29, 210 and 211, respectively), the arrangements (7) found are ranked again.

7. The method according to claim 5 or 6, **characterised in that** all arrangements (7) contained in a ranking are selected if the number of arrangements (7) contained in the ranking does not exceed a certain number and/or all included arrangements (7) have the same rank.

**Revendications**

1. Procédé d'inspection de domaines de contrôle répartis de manière quelconque sur des ensembles électroniques, dans lequel des arrangements d'un champ d'image limité virtuellement par des lignes de délimitation dans un plan x-y, qui contient dans une surface de contrôle une population de domaines de contrôle de dimensions et relations de position connues, sont sélectionnés de sorte que chaque domaine de contrôle soit complètement contenu une fois dans un champ d'image par un ensemble d'arrangements, ledit procédé comportant les étapes de:

- balayer la surface de contrôle (3) avec le champ d'image (4) et de trouver des arrangements (7) du champ d'image (4) sous forme d'images momentanées de l'opération de balayage, un premier arrangement (71) du champ d'image (4) et chaque autre arrangement (7) étant trouvés lorsqu'au moins un domaine de contrôle (21 à 27, respectivement 28, 29, 210 et 211), non pas complètement contenu dans un arrangement (7) du champ d'image (4) trouvé précédemment, est complètement contenu dans le champ d'image (4) regardé à un instant et le contour d'un domaine de contrôle (21 à 27, respectivement 28, 29, 210 et 211) complètement contenu dans le champ d'image (4) dudit arrangement (7) se situe à une distance définie par rapport à une ligne de délimitation (5), dite ligne de référence (51), du champ d'image (4);

- saisir chaque arrangement (7) respectivement trouvé ainsi que les domaines de contrôle (21 à 27, respectivement 28, 29, 210 et 211) complètement contenus dans le champ d'image (4) d'un arrangement (7) respectif;

- établir un classement, selon une règle, de tous les arrangements (7) saisis;

- sélectionner un des arrangements (7) classés et additionner cet arrangement (7) sélectionné à l'ensemble d'arrangements (7);

- enlever virtuellement, de la population des domaines de contrôle (21 à 27 ainsi que 28, 29, 210 et 211), les domaines de contrôle (21 à 27, ainsi que 28, 29, 210 et 211) complètement inclus dans l'arrangement (7) sélectionné et répéter les étapes nécessaires pour établir le classement des arrangements (7) jusqu'à ce que tous les domaines de contrôle (21 et 27 ainsi que 28, 29, 210 et 211) soient contenus dans un arrangement (7), sélectionné selon un classement, d'un champ d'image (4) et additionnés à l'ensemble d'arrangements (7), **caractérisé en ce que** la règle selon laquelle le classement est établi est une fonction de la forme générale

$$Z = \max_{j=1}^{g} \left\{ \sum_{i=1}^{nj} (Ci^{k}) \right\}$$

où

Z est la fonction à maximaliser,

j est une variable courante concernant le nombre d'arrangements $(7_j)$ trouvés pour le champ d'image (4),

g est le nombre d'arrangements $(7_j)$ du champ d'image (4) trouvés et saisis,

i est une variable courante concernant le nombre de domaines de contrôle complètement contenus dans l'arrangement $(7_j)$,

$n_j$ est le nombre des domaines de contrôle $(2_i)$ complètement contenus dans l'arrangement $(7_j)$,

$c_i$ est le nombre d'arrangements $(7_j)$ par lesquels l'i-tième domaine de contrôle est complètement saisi, et

k est un nombre réel,

ou **caractérisé en ce que** la règle selon laquelle le classement est établi est une fonction de la forme générale

$$Z = \min_{j=1}^{g} \left\{ -\sum_{i=1}^{nj} (Ci^{k}) \right\}$$

où

Z est la fonction à minimiser,

j est une variable courante concernant le nombre d'arrangements $(7_j)$ trouvés pour le champ d'image (4),

g est le nombre d'arrangements $(7_j)$ trouvés pour le champ d'image (4),

$n_j$ est le nombre des domaines de contrôle $(2_i)$ complètement contenus dans l'arrangement $(7_j)$,

i est une variable courante concernant le nombre de domaines de contrôle complètement contenus dans l'arrangement $(7_j)$,

$c_i$ est le nombre d'arrangements $(7_j)$ par lesquels l'i-tième domaine de contrôle est complètement saisi, et

k est un nombre réel.

2. Procédé selon la revendication 1, **caractérisé en ce que** le balayage est effectué ligne par ligne et un arrangement (7) du champ d'image (4) est trouvé chaque fois qu'au moins un domaine de contrôle (21 à 27, respectivement 28, 29, 210 et 211), non pas complètement contenu dans un arrangement (7) du champ d'image (4) dans la ligne actuelle trouvé précédemment, est complètement contenu dans le champ d'image (4) regardé à un moment et le contour d'un domaine de contrôle (21 à 27, respectivement 28, 29, 210 et 211) complètement contenu dans le champ d'image (4) dudit arrangement (7) se situe à une distance définie par rapport à une ligne de référence (51) du champ d'image (4).

3. Procédé selon l'une quelconque des revendications 1 à 2, **caractérisé en ce que**, dans un arrangement (7), la distance entre le contour d'au moins un domaine de contrôle (21 à 27, respectivement 28, 29, 210 et 211) et la ligne de référence (51) est égale à zéro.

4. Procédé selon l'une quelconque des revendications 1 à 3, **caractérisé en ce que**, dans un arrangement (7), le contour d'au moins un domaine de contrôle se situe dans au moins un point sur la ligne de référence (51).

5. Procédé selon la revendication 3 ou 4, **caractérisé en ce qu'**àprés les domaines de contrôle (21 à 27, respectivement 28, 29, 210 et 211) complètement compris dans l'arrangement (7) sélectionné ont été enlevés virtuellement de la population des domaines de contrôle (21 à 27, respectivement 28, 29, 210 et 211), le balayage commence de nouveau.

6. Procédé selon la revendication 3 ou 4, **caractérisé en ce qu'**àprés les domaines de contrôle (21 à 27, respectivement 28, 29, 210 et 211) complètement compris par l'arrangement (7) sélectionné ont été enlevés virtuellement de la population des domaines de contrôle (21 à 27, respectivement 28, 29, 210 et 211), les arrangements (7) trouvés sont classés de nouveau.

7. Procédé selon la revendication 5 ou 6, **caractérisé en ce que** tous les arrangements (7) contenus dans un classement sont sélectionnés si le nombre des arrangements (7) contenus dans ledit classement n'est pas supérieur à un certain nombre et/ou tous les arrangements (7) contenus occupent le même rang.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0718623 A2

- WO 9852156 A1